(19) Europäisches Patentamt
European Patent Office
Office européen des brevets

(11) **EP 4 224 081 A1**

(12) **EUROPEAN PATENT APPLICATION**
published in accordance with Art. 153(4) EPC

(43) Date of publication:
**09.08.2023 Bulletin 2023/32**

(21) Application number: **21889244.6**

(22) Date of filing: **04.11.2021**

(51) International Patent Classification (IPC):
*F24F 11/61* (2018.01)     *F24F 11/63* (2018.01)
*F24F 11/80* (2018.01)     *F24F 110/10* (2018.01)
*F24F 110/20* (2018.01)     *F24F 110/30* (2018.01)
*F24F 120/00* (2018.01)     *F24F 120/14* (2018.01)

(52) Cooperative Patent Classification (CPC):
**F24F 11/61; F24F 11/63; F24F 11/80;**
F24F 2110/10; F24F 2110/20; F24F 2110/30;
F24F 2120/00; F24F 2120/14

(86) International application number:
**PCT/JP2021/040646**

(87) International publication number:
**WO 2022/097692 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.11.2020   JP 2020184650
04.11.2020   JP 2020184619**

(71) Applicants:
• **DAIKIN INDUSTRIES, LTD.**
**Osaka-shi, Osaka 530-0001 (JP)**
• **RIKEN**
**Wako-shi, Saitama 351-0198 (JP)**

(72) Inventors:
• **EMOTO, Shiori**
**Osaka-shi, Osaka 530-8323 (JP)**

• **HORI, Shouta**
**Osaka-shi, Osaka 530-8323 (JP)**
• **SAKATA, Youko**
**Osaka-shi, Osaka 530-8323 (JP)**
• **IWASAKI, Miho**
**Wako-shi, Saitama 351-0198 (JP)**
• **MORITO, Yusuke**
**Wako-shi, Saitama 351-0198 (JP)**
• **WATANABE, Yasuyoshi**
**Wako-shi, Saitama 351-0198 (JP)**
• **MIZUNO, Kei**
**Wako-shi, Saitama 351-0198 (JP)**

(74) Representative: **Hoffmann Eitle
Patent- und Rechtsanwälte PartmbB
Arabellastraße 30
81925 München (DE)**

(54) **TEMPERATURE LOAD MANAGEMENT DEVICE, TEMPERATURE LOAD MANAGEMENT METHOD, AND COMPUTER PROGRAM**

(57)     A temperature load management device (20) is for use in exposing a user to a second environment for removing a first temperature load accumulated in a first environment. The temperature load management device (20) includes the control unit (10) as a main component. The control unit (10) controls the second environment or makes a notification of a time to end the exposing of the user to the second environment, based on physiological information on the user.

FIG.12

EP 4 224 081 A1

**Description**

TECHNICAL FIELD

The present disclosure relates to a temperature load management device, a temperature load management method, and a computer program.

BACKGROUND ART

When a person is exposed to an extreme temperature environment, such as a hot environment or a very cold environment, for a long time period, the person has not only a mental burden, such as uncomfortable feelings or irritation, due to the heat or cold, but also a physical burden, such as damages to internal organs and a physiological burden on an autonomic nerve system due to, for example, a large amount of sweating, shivering, and a body temperature rise (or fall).

Patent Document 1 suggests a portable air-conditioned room where workers or others can escape and take a rest easily when they feel a disorder, such as heat stroke, in hot outdoor or other places.

For example, even if a person enters a normal-temperature environment immediately after being exposed to a hot environment, the person is still under the influence of the heat and difficult to concentrate on work or other tasks immediately. Specifically, dehydration due to continuous sweating, or continuation of the local cold and uncomfortable feelings in air-conditioned cold air due to wearing of a shirt wet with sweat may decrease work efficiency. In addition, the thermal stress accumulated in the human body for a long time period may become mental and physical stress described above, which may cause another mental and physical stress.

To address this, known air conditioners are configured to control the temperature by lowering a target set temperature when the outdoor air temperature becomes high and raising the target set temperature when the outdoor air temperature becomes low, in consideration of the comfortability. There is however a concern in this temperature control that the ambient temperature changes largely, and a person feels what is called "heat shock", when the person goes out of an air-conditioned room, enters an air-conditioned room from outside, or moves from an air-conditioned room to a non-air-conditioned room. There is also a concern about a physical disorder due to too-cold air, that is, what is called an "air-conditioning syndrome."

Patent Document 2 suggests a cooling operation for keeping the temperature difference between an outdoor air temperature and an indoor temperature within a range from 5°C to 7°C in order to mitigate the heat shock and avoid too-cold air.

CITATION LIST

PATENT DOCUMENTS

Patent Document 1: Japanese Unexamined Patent Publication No. 2020-63864
Patent Document 2: Japanese Unexamined Patent Publication No. H10-61994

SUMMARY OF THE INVENTION

TECHNICAL PROBLEMS

However, the portable air-conditioned room disclosed in Patent Document 1 is a narrow room where the temperature is lowered to cool users evenly. Thus, some may feel it is too cold and others may feel it is not cold enough.

The air conditioner according to Patent Document 2 performs control to reduce the temperature difference and avoid too-cold air with respect to the hot environment outdoors, requiring time in reducing the influence of the temperature load of the outdoor air temperature on the mind and body of a user. This means that a burden of the hot environment is continuously applied on the mind and body of the user until the user regains a normal condition.

It is an objective of the present disclosure to provide an environment for appropriately removing a temperature load accumulated under hot, cold, or other environments.

SOLUTION TO THE PROBLEMS

A first aspect of the present disclosure is directed to a temperature load management device (20) for use in exposing a user to a second environment for removing a first temperature load accumulated in a first environment. The temperature load management device (20) includes a control unit (10) configured to control the second environment or make a notification of a time to end the exposing, based on physiological information on the user.

According to the first aspect, control of the second environment for removing the first temperature load accumulated in the first environment or making a notification of the time to end the exposure of the user to the second environment are performed based on the physiological information on the user. Accordingly, the temperature, period of use, or other factors of the second environment can be set in accordance with the user. It is therefore possible for the user to use the second environment more appropriately.

A second aspect of the present disclosure is an embodiment of the first aspect. In the second aspect, the control unit (10) sets a shell temperature of the user to a target value, based on a correlation among the shell temperature of the user, a load temperature which is a temperature of the first environment, a reduction temperature which is a temperature of the second environment, and a reduction period for exposing the user to the second environment, the control unit (10) being configured to receive as inputs the load temperature and one of the reduction temperature or the reduction period, and output the other of the reduction temperature or the reduction period.

According to the second aspect, the reduction temperature or the reduction period of the second environment for reducing the temperature load are obtained based on the load temperature of the first environment so that the shell temperature of the user will be the target value. The second environment is air-conditioned based on this reduction temperature or reduction period, thereby making it possible to promote the heat exchange between the skin temperature and the core body temperature and quickly reduce the influence of the temperature load on the mind and body of the user.

A third aspect of the present disclosure is an embodiment of the second aspect. In the third aspect, the correlation is expressed by:

$$BTs(t) = \beta1 \times \ln(t) + \beta2;$$

$$\beta1 = A1 \times TR + B1 \times TL - C1;$$

and

$$\beta2 = A2 \times TR + B2 \times TL - C2,$$

where BTs is the shell temperature, TL is the load temperature, TR is the reduction temperature, t is the reduction period, ln is a natural logarithm, and A1, A2, B1, B2, C1, and C2 are model parameters.

According to the third aspect, it is possible to obtain the correlation among the shell temperature of the user, the load temperature, the reduction temperature, and the reduction period through experimental calculation of the model parameters in advance.

A fourth aspect of the present disclosure is an embodiment of the third aspect. In the fourth aspect, the first environment is a hot environment or a cold environment, and the model parameters A1, A2, B1, B2, C1, and C2 are set in consideration of clothes worn by the user.

According to the fourth aspect, it is possible to obtain more accurately the reduction temperature or the reduction period for reducing the influence of the temperature load caused by a hot environment or a cold environment.

A fifth aspect of the present disclosure is an embodiment of the third or fourth aspect. In the fifth aspect, the model parameters A1, A2, B1, B2, C1, and C2 are adjusted in accordance with an attribute of the user.

According to the fifth aspect, it is possible to obtain a suitable reduction temperature or a suitable reduction period for reducing the influence of the temperature load in accordance with the attribute of the user.

A sixth aspect of the present disclosure is an embodiment of any one of the second to fifth aspects. In the sixth aspect, the load temperature is corrected in view of at least one of a humidity, a wind speed, or a radiation temperature in the first environment.

According to the sixth aspect, it is possible to obtain more accurately the reduction temperature or the reduction period for reducing the influence of the temperature load through correct evaluation of the load temperature.

A seventh aspect of the present disclosure is an embodiment of the first aspect. In the seventh aspect, the control unit (10) controls the second environment or makes the notification of the time in accordance with accumulation of first human body exergy accumulated in the user at the first temperature load.

According to the seventh aspect, the control unit controls the second environment or provides other control in accordance with, for example, the accumulation of the first human body exergy that is accumulated in a user who has been subjected to a hot load in a hot environment and is accumulated due to the hot load. It is therefore possible for the user to use the second environment more appropriately.

An eighth aspect of the present disclosure is an embodiment of the seventh aspect. In the eighth aspect, the control unit (10) sets a temperature of the second environment or the time, based on the accumulation of the first human body exergy and accumulation of second human body exergy that is accumulated at a second temperature load, which is opposite to the first temperature load, and is necessary to cancel the accumulation of the first human body exergy.

According to the eighth aspect, for example, the accumulation of the first human body exergy accumulated in the user in a hot environment and the accumulation of the second human body exergy that is accumulated at a cold load and is necessary to cancel the accumulation of the first human body exergy accumulated at the hot load are obtained. These accumulations of the human body exergy allow setting of the temperature and/or period of use of the second environment suitable for the user.

A ninth aspect of the present disclosure is an embodiment of any one of the first, seventh, and eighth aspects. In the ninth aspect, the temperature load management device further includes a sensing unit (11) configured to detect the physiological information.

According to the ninth aspect, it is possible to control the second environment or provide other control using the physiological information on the user detected by the sensing unit (11).

A tenth aspect of the present disclosure is an embodiment of the ninth aspect. In the tenth aspect, the sensing unit (11) is of a bracelet type worn by the user and a sensor for measuring body temperatures at a plurality of points.

According to the tenth aspect, it is possible to facilitate the detection of the physiological information, such as the amount of sweating or the heart rate, on the user.

An eleventh aspect of the present disclosure is an embodiment of any one of the first and seventh to tenth aspects. In the eleventh aspect, the physiological information is at least one of a metabolic rate, a skin temperature, a core temperature, an amount of sweating, a blood vessel diameter, a blood flow rate, a heart rate, a heart rate variability, or a respiration rate.

According to the eleventh aspect, it is possible to use the physiological information related to the temperature load accumulated in the user.

A twelfth aspect of the present disclosure is an embodiment of any one of the first and seventh to eleventh aspects. In the twelfth aspect, a target of control in the second environment is at least one of a temperature, a humidity, a radiation temperature, or an airflow.

According to the twelfth aspect, it is possible to remove the temperature load from the user by the control of the second environment.

A thirteenth aspect of the present disclosure is directed to an air-conditioning system including: the temperature load management device (20) of any one of the second to sixth aspects; and an air conditioner (30) configured to condition air in the second environment, based on the reduction temperature or the reduction period output from the control unit (10).

According to the thirteenth aspect, the air conditioner (30) conditions the air in the second environment, based on the reduction temperature or the reduction period output from the control unit (10), thereby making it possible to promote the heat exchange between the skin temperature and the core body temperature and quickly reduce the influence of the temperature load on the mind and body of the user.

A fourteenth aspect of the present disclosure is an embodiment of the thirteenth aspect. In the fourteenth aspect, the air-conditioning system further includes an adjuster (40) configured to allow the user to change the reduction temperature or the reduction period output from the control unit (10).

According to the fourteenth aspect, it is possible to condition the air in the second environment for reducing the temperature load in accordance with the preferences of the user.

A fifteenth aspect of the present disclosure is an embodiment of the thirteenth or fourteenth aspect. In the fifteenth aspect, the air-conditioning system further includes: a detector (50) configured to detect the shell temperature, wherein if a difference between the shell temperature detected by the detector (50) and the target value exceeds a first predetermined value, the air conditioner (30) changes the reduction temperature so that a difference between the reduction temperature and normal temperature is lower than or equal to a second predetermined value, or issues an alert to the user to stop the exposure to the second environment.

According to the fifteenth aspect, it is possible to mitigate heat shock and/or avoid too-cold air.

A sixteenth aspect of the present disclosure is an embodiment of any one of the thirteenth to fifteenth aspects. In the sixteenth aspect, the air-conditioning system further includes: a sensor (60) configured to sense entry of the user into the second environment, wherein the air conditioner (30) ends the air conditioning with the reduction temperature at a time when the reduction period has elapsed since the sensor (60) sensed the entry of the user into the second environment.

According to the sixteenth aspect, it is possible to reduce the costs for the air conditioning with the reduction temperature.

A seventeenth aspect of the present disclosure is directed to a temperature load management method for use in exposing a user to a second environment for removing a first temperature load accumulated in a first environment, the temperature load management method including: controlling the second environment or making a notification of a time to end the exposing, based on physiological information on the user.

According to the seventeenth aspect, control of the second environment for removing the first temperature load accumulated in the first environment or making a notification of the time to end the exposure of the user to the second environment are performed based on the physiological information on the user. Accordingly, the temperature, period of use, or other factors of the second environment can be set in accordance with the user, thereby making it possible for the user to use the second environment appropriately.

An eighteenth aspect of the present disclosure is an embodiment of the seventeenth aspect. In the eighteenth aspect, the temperature load management method further includes: setting a shell temperature of the user to a target value, based on a correlation among the shell temperature of the user, a load temperature which is a temperature of the first environment, a reduction temperature which is a temperature of the second environment, and a reduction period for exposing the user to the second environment; receiving as inputs the load temperature and one of the reduction temperature or the reduction period; and outputting the other of the reduction temperature or the reduction period.

According to the eighteenth aspect, the reduction temperature or the reduction period of the second environment for reducing the temperature load are obtained based on the load temperature of the first environment so that the shell temperature of the user will be the target value. The second environment is air-conditioned based on this reduction temperature or reduction period, thereby making it possible to promote the heat exchange between the skin temperature and the core body temperature and quickly reduce the influence of the temperature load on the mind and body of the user.

A nineteenth aspect of the present disclosure is directed to a computer program for causing a computer to execute the temperature load management method of the seventeenth or eighteenth aspect.

The nineteenth aspect provides the same or similar advantages as the seventeenth or eighteenth aspect.

BRIEF DESCRIPTION OF THE DRAWINGS

FIG. 1 is a diagram for explaining a temperature load reduction model.
FIG. 2 is a diagram for explaining another temperature load reduction model.
FIG. 3 is a diagram for explaining yet another temperature load reduction model.
FIG. 4 is a block diagram of a configuration of an air-conditioning system including a temperature load management device according to a first embodiment.
FIG. 5 is a diagram showing an example relationship, obtained by a temperature load reduction model, between a reduction temperature and a load temperature.
FIG. 6 is a diagram showing a change in the reduction temperature in FIG. 5.
FIG. 7 is a diagram illustrating an example airflow directions under an environment for reducing a temperature load.
FIG. 8 is a diagram showing a simulation result of the human body exergy accumulation at application of a temperature load.
FIG. 9 is a diagram showing a simulation result of the total amount of the human body exergy accumulation at application of a temperature load.
FIG. 10 is a diagram showing a simulation result of the total amount of the human body exergy accumulation in a restoration environment after application of a temperature load.
FIG. 11 is a diagram showing a simulation result of the total amount of the human body exergy accumulation at a plurality of temperatures in a restoration environment after application of a temperature load.
FIG. 12 is a block diagram of a configuration of an air-conditioning system including a temperature load management device according to a second embodiment.

DESCRIPTION OF EMBODIMENTS

Hereinafter, embodiments of the present disclosure will be described with reference to the drawings. The embodiments below are merely exemplary ones in nature, and are not intended to limit the scope, applications, or use of the invention.

<<First Embodiment>>

<Temperature Load Reduction Model>

It is known that if a person who has been exposed to a hot environment puts themselves in a low-temperature environment, where the temperature is lower than or equal to normal temperature, even in a short time period to remove a thermal load, the person is relieved of negative influences of the thermal load on the mind and body and regains concentration. That is, with the thermal stress inside the body reduced quickly, mental and physical stress is less likely to continue, and the person feels refreshed more easily.

Thus, while a person is being exposed to an extreme temperature environment, or when a person goes indoors, the influence of the temperature load can be reduced by air-conditioning control which temporarily provides a temperature environment that is opposite, with respect to normal temperature, to the temperature environment that has forced physical and mental burdens. The opposite temperature environment specifically is an environment where the temperature is lower than or equal to normal temperature in the case of a load due to a hot environment, or an environment where the temperature is higher than or equal to normal temperature in the case of a load due to a cold environment.

It has generally been thought that large temperature differences are bad for the human body. However, the present inventors have found out through experiments that the entry into a low-temperature environment (e.g., 21°C) after adapting to a hot environment (e.g., 36°C) can reduce the skin temperature (i.e., the shell temperature) rapidly and reduce the hot load (e.g., a decrease in the parasympathetic nerve function, an increase in the heart rate, and an increase in the amount of sweating) as compared to the entry into a typical indoor environment (e.g., about 26°C). Based on this finding, the inventors conceived of the idea of a temperature load reduction model, which will be described later. The present inventors have embodied the temperature load reduction model, focusing on the following fact: the influence of the temperature load on the entire body due to a hot or cold environment can be reduced by quickly adjusting the shell temperature, such as the skin surface temperature, to a temperature lower (in a hot environment) or higher (in a cold environment) than the temperature in a balanced state in a normal-temperature environment and promoting the heat exchange between the skin temperature and the core body temperature. Based on this temperature load reduction model, the ambient temperature (i.e., the reduction temperature) and the period of stay (i.e., reduction period) that are suitable for reducing the influence of the temperature load can be calculated.

A temperature load $HS(t)$ ($t$ is a time) can be expressed as follows, where $BTc$ represents a core body temperature as a representative value for evaluating a temperature load (i.e., thermal stress) on a body, $BTs$ represents a shell temperature (i.e., the temperature of the skin surface), and $\alpha \times \Delta BT$ ($\Delta$ represents a temperature difference relative to a normal body temperature) represents the amount of thermal stress.

$$\text{Normal-Temperature Environment: } HS(t) = 0$$

$$\text{Hot Environment: } HS(t) = \alpha c \times \Delta BTc(t) + \alpha s \times \Delta BTs(t)$$

Here, $\Delta BTs$ and $\Delta BTc$ are deviations of the shell temperature and the core body temperature relative to a balanced state at normal temperature, respectively, and $\alpha s$ and $\alpha c$ are thermal stress factors based on the volumes of the shell and the core, respectively. In the normal-temperature environment, $\Delta BT = 0$, that is, the thermal stress is zero.

The core exchanges heat with the shell and is thus indirectly influenced by the outdoor air temperature. With the use of the heat exchange amount $HE$ among the outside air, the shell, and the core, the body temperature $BT$ at a time $t$ can be expressed as follows.

$$BTs(t) = BTs(t-1) - HEsc(t-1)/\alpha s + HEes(t-1)/\alpha s$$

$$BTc(t) = BTc(t-1) + HEsc(t-1)/\alpha c$$

Here, $HEes$ is the amount of heat exchanged between the outside air and the shell, and $HEsc$ is the amount of heat exchanged between the shell and the core.

$HEsc$ can also be expressed as $HEsc = PL + PC$. $PL$ represents a regulatory element that depends on a dynamic thermoregulatory function under physiological control through heat release and thermogenesis mechanisms via blood flow (including sweating) and/or muscles or other mechanisms. $PC$ represents a regulatory element that does not depend on the thermoregulatory function of physical heat transfer through static substances, such as muscles in areas near the core and shell.

Due to the physiological structure, the blood flow temperature related to $PL$ is directly influenced by the shell temperature. The shell temperature thus influences both $PL$ and $PC$.

In view of the foregoing, at a decrease in the thermoregulatory function due to exposure to a hot environment for a long time period, it is possible to promote a reduction in $\alpha c \times \Delta BTc$, which corresponds to the thermal stress on the core, through PC and PL at an early stage by quickly lowering the shell temperature to a temperature lower than or equal to a temperature in a physically balanced state.

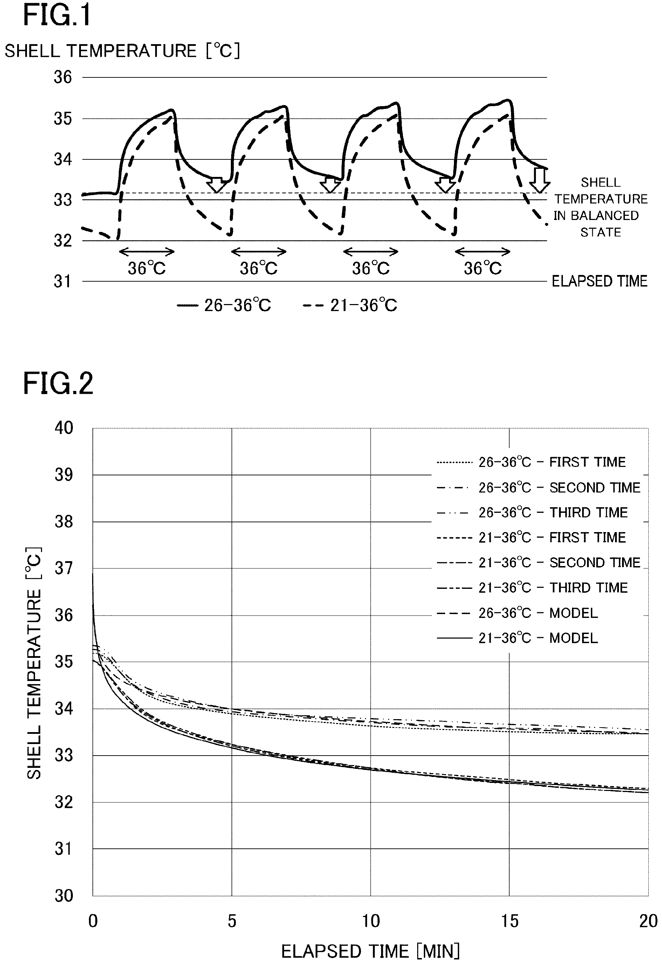

FIG. 1 shows changes in the shell temperature over time when a person repeated the acts of entering a normal-temperature environment (26°C) after adapting to a hot environment (36°C) and entering a low-temperature environment (21°C) after adapting to the hot environment.

As shown in FIG. 1, in the case where the person enters the normal-temperature environment (26°C) after adapting to the hot environment (36°C), the shell temperature does not fall enough to a reference value in a balanced state in about 20 minutes, and the thermal stress thus continues for a long time period. In particular, since the core temperature varies indirectly through the heat exchange process between the core and the shell, a longer application of the thermal stress on the core is expected. On the other hand, in the case where the person enters the low-temperature environment (21°C) with a temperature lower than or equal to normal temperature after adapting to the hot environment (36°C), the shell temperature quickly falls to be lower than or equal to the reference value in a balanced state at normal temperature. That is, reduction in the thermal stress on the core at an early stage can be expected through the heat exchange process between the core and the shell caused by an external air-conditioning operation.

After intensive studies, the present inventors have found out that the shell temperature BTs(t) can be expressed by the following temperature load reduction model, where t is the elapsed time after a person has entered the environment for reducing the temperature load (hereinafter also referred to as a "reduction environment"), using TL, which is the temperature of the environment applying a temperature load (hereinafter also referred to as the "load temperature"), and TR, which is the temperature of the reduction environment (hereinafter also referred to as the "reduction tempera-ture").

$$BTs(t) = \beta 1 \times \ln(t) + \beta 2 \quad \ldots \text{Equation (1)}$$

$$\beta 1 = A1 \times TR + B1 \times TL - C1 \quad \ldots \text{Equation (2)}$$

$$\beta 2 = A2 \times TR + B2 \times TL - C2 \quad \ldots \text{Equation (3)}$$

where ln is a natural logarithm, and A1, B1, C1, A2, B2 and C2 are model parameters.

Thirty healthy adult men and women did the acts of entering a normal-temperature environment (26°C) and a low-temperature environment (21°C), three times each, after adapting to a hot environment (36°C). FIG. 2 shows the mean values (represented by broken lines) indicating actual measurement results of the changes in the shell temperatures over time, and an estimated value (represented by a solid line) of a shell temperature BTs(t) based on Equations (1) to (3) using the model parameters A1, A2, B1, B2, C1, and C2 calculated using the actual measurement results. The model parameters A1, B1, C1, A2, B2, and C2 calculated from the actual measurement results shown in FIG. 2 were 0.05, -0.03, 0.60, 0.08, 0.17, and -26.3, respectively.

In the temperature load reduction model expressed by Equations (1) to (3), if the target value of the shell temperature BTs, which serves as a reference for reducing the thermal stress on the core, is set to 33°C which is lower than an average temperature in a balanced state, and the period t for exposing a person to the environment for reducing the temperature load (hereinafter also referred to as "reduction period") is set to 10 minutes, the relationship of the reduction temperature TR with the load temperature TL can be expressed simply as follows.

$$TR = 39.5 - 0.47 \times TL \quad \ldots (4)$$

Equation (4) allows the calculation of an ideal reduction temperature TR from the load temperature (i.e., outdoor air temperature) TL by setting the target value of the shell temperature BTs to be lower than or equal to the reference value in the balanced state.

As described above, the model parameters according to a possible situation are set in the temperature load reduction model expressing the correlation among the shell temperature BTs, the load temperature TL, the reduction temperature TR, and the reduction period t. This allows air-conditioning control for reducing, at an early stage, the thermal stress accumulated in a person in a hot environment. Specifically, the temperature load reduction model in which the shell temperature BTs is set to a target value and to which the load temperature TL and one of the reduction temperature TR or the reduction period t are input can output the other one of the reduction temperature TR or the reduction period t.

The temperature load reduction model expressed by Equations (1) to (3) allows calculation of the model parameters A1, B1, C1, A2, B2, and C2 for estimating an optimum reduction temperature TR and an optimum reduction period t, based on the parameters β1 and β2 obtained by logarithmic approximation of the actual measurement values of the changes in the load temperature TL, the reduction temperature TR, the reduction period t (a period when an environment for reducing the temperature load is used), and the shell temperature BTs over time.

With respect to the air-conditioning control of the reduction environment for reducing the temperature load, the reduction temperature TR and/or the reduction period t necessary to lower the shell temperature BTs by a certain value (e.g., 0.5°C to 1.5°C) can be calculated from the load temperature TL with part of the four parameters (TL, TR, t, and BTs) described above set to constants.

The temperature load reduction model expressed by Equations (1) to (3) assumes a case in which a person is subjected to an intense temperature load in a hot environment or a cold environment, specifically, mainly assumes a case in which a person is subjected to a severe temperature load of 5°C or more different from normal temperature (i.e., 25°C to 28°C in summer and 18°C to 22°C in winter). In other words, in an environment around normal temperature, the thermoregulatory function works normally, and less thermal stress is accumulated inside the body. Thus, the state of variations in the shell temperature BTs also deviates from the model Equations (1) to (3). In an environment around normal temperature, the reduction itself in the temperature load is unnecessary, which means that air-conditioning control of the reduction environment based on the temperature load reduction model is not necessary.

The temperature load reduction model expressed by Equations (1) to (3) is designed based on the thermal stress under a hot environment in summer. However, it is also possible to calculate the reduction temperature TR and/or the reduction period t against the negative thermal stress under a cold environment in winter by calculating the model parameters A1, B1, C1, A2, B2, and C2 with back data in winter taken in advance. The model parameters in winter are estimated based on the average temperature from December to February, for example. The load temperature applying a cold load, to which the temperature load reduction model is applied, may be 10°C or less, for example.

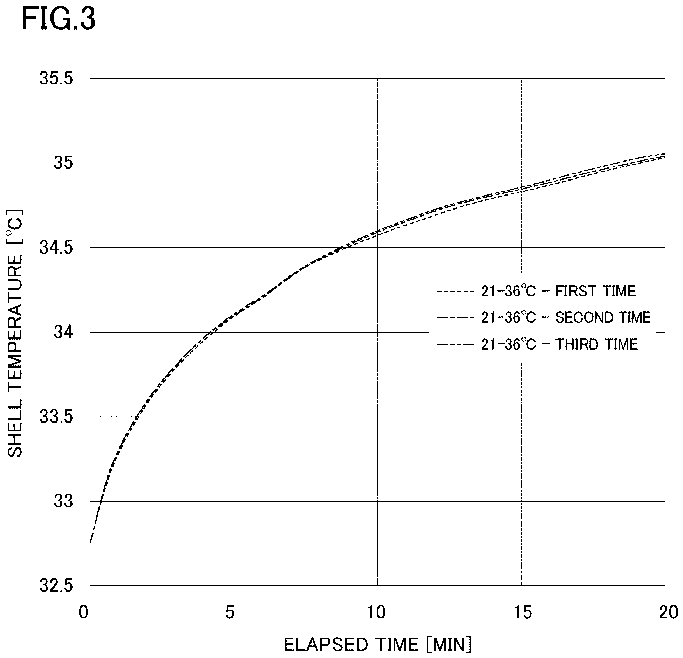

Thirty healthy adult men and women did the act of entering a high-temperature environment (36°C) after adapting to a low-temperature environment (21°C) three times. FIG. 3 shows the mean values indicating actual measurement results of changes in the shell temperatures over time. Using the actual measurement results shown in FIG. 3, β1 and β2 in Equation (1) are subjected to logarithmic approximation, resulting in 0.533 and 33.53, where $R^2 = 0.95$. That is, β1 is a negative value at the application of a hot load, whereas β1 is a positive value at the application of a cold load.

<Configuration of Temperature Load Management Device>

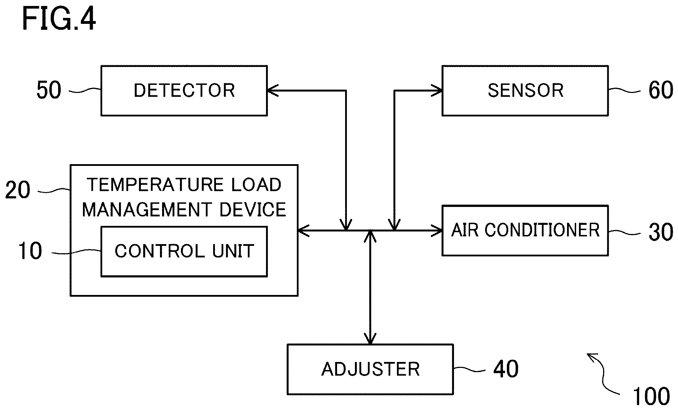

FIG. 4 is a block diagram of a configuration of an air-conditioning system (100) including a temperature load management device (20) according to the first embodiment. The temperature load management device (20) according to this embodiment is for use in exposing a user to a second environment (i.e., a reduction environment) for reducing a temperature load accumulated in the user in a first environment (i.e., a hot environment or a cold environment).

As shown in FIG. 4, the temperature load management device (20) includes a control unit (10) as a main component. The control unit (10) sets a shell temperature BTs of the user to a target value, based on a correlation (i.e., the temperature load reduction model) among the shell temperature BTs of the user, a load temperature TL which is a temperature of the first environment, a reduction temperature TR which is a temperature of the second environment, and a reduction period t for exposing the user to the second environment. The control unit (10) receives as inputs the load temperature TL and one of the reduction temperature TR or the reduction period t, and outputs the other of the reduction temperature TR or the reduction period t.

For example, the temperature load management device (20) may further include a storage unit configured to store the model represented by Equations (1) to (3) described above and model parameters (A1, A2, B1, B2, C1, and C2) calculated in advance from actual measurement values. For example, the temperature load management device (20) may further include an input unit and a display unit for setting the shell temperature BTs to a target value, inputting the load temperature TL and one of the reduction temperature TR or the reduction period t, and outputting the other of the reduction temperature TR or the reduction period t. For example, the temperature load management device (20) may further include a measurement unit configured to measure an outdoor air temperature that serves as the load temperature TL. For example, the temperature load management device (20) may use, as the outdoor air temperature that serves as the load temperature TL, outdoor air temperature information, such as AMeDAS, obtained from the Internet.

The temperature load management device (20) includes a computer, such as a microcomputer, configured to execute programs to perform functions of the control unit (10) or the like, that is, the temperature load management method according to this embodiment. The computer includes, as a main hardware configuration, a processor that operates in accordance with programs. The processor may be of any type as long as the processor can perform the functions by executing programs and may include one or more electronic circuits including a semiconductor integrated circuit (IC) or a large-scale integration (LSI) circuit, for example. For example, the plurality of electronic circuits may be integrated on one chip or provided on a plurality of chips. For example, the plurality of chips may be integrated into one device or provided in a plurality of devices. The programs are recorded in a non-transitory recording medium, such as a computer-readable ROM, an optical disk, or a hard disk drive. For example, the programs may be stored in advance in the recording medium, or may be supplied to the recording medium via a wide area communication network, such as the Internet.

If the temperature load management device (20) has a storage unit, the storage unit may be, for example, a computer-readable and writable recording medium, such as a RAM. If the temperature load management device (20) has an input unit, the input unit may be, for example, a keyboard, a mouse, a touch pad, or the like. If the temperature load management device (20) has a display unit, the display unit may be, for example, a monitor, such as a CRT or a liquid crystal display, capable of displaying images. If the temperature load management device (20) has a measurement unit, the measurement unit may be, for example, a temperature sensor carried by a user, or temperature sensors provided at a plurality of points (e.g., a room, a public institution, or outdoors). In the latter case, the temperature around the user is calculated based on temperature history data measured by the temperature sensors provided at the plurality of points and movement history data on the user. For example, the movement history data on the user may be stored in advance, or may be set and input by the user as appropriate or based on the schedule of the day.

How to mount the temperature load management device (20) is not limited. For example, the temperature load management device (20) may be mounted on a remote control of an air conditioner (30) which will be described later. In this case, the temperature load management device (20) may be configured using, for example, a microcomputer, a memory, a touch panel, or any other suitable element mounted on the remote control.

For example, the temperature load management device (20) may use the model represented by Equations (1) to (3) described above as the temperature load reduction model representing the correlation among the shell temperature BTs, the load temperature TL, the reduction temperature TR, and the reduction period t. The temperature load reduction model used by the temperature load management device (20) may be any other model as long as the model expresses the correlation among the shell temperature BTs, the load temperature TL, the reduction temperature TR, and the reduction period t.

For example, the temperature load management device (20) may set the model parameters A1, A2, B1, B2, C1, and C2 in consideration of clothes worn by the user in the case where the first environment is a hot environment or a cold environment. For example, at the time of calculation of the parameters, different model parameters may be set in accordance with the season, using the data measured when the user is wearing short-sleeved clothes in summer and long-sleeved clothes in winter.

The temperature load reduction model assumes physical heat transfer to the core body temperature through the shell temperature BTs. In summer, the shell temperature BTs is more directly influenced by the outdoor air temperature (i.e., the load temperature TL) due to light clothes. On the other hand, in winter, the heat retention of clothes is unignorable, and the shell temperature BTs estimated from the outdoor air temperature is high as compared to the temperature load reduction model for a hot environment, which changes the effect of the reduction temperature TR on a person. Thus, the temperature load reduction model for a cold environment requires correction of the model parameters depending on the on/off of the clothes.

Specifically, in a case where the environment for reducing the temperature load is an indoor environment, the skin temperature of a person wearing, for example, a jacket is measured as the shell temperature BTs during exposure to the temperature load in a cold environment, and the skin temperature without the jacket is measured as the shell temperature BTs in a reduction environment. Based on the data on the variation in the shell temperature BTs measured, the model parameters of the temperature load reduction model for the cold environment are calculated. On the other hand, in a case where the environment for reducing the temperature load is outdoors, the skin temperature of a person wearing a jacket is measured as the shell temperature BTs both during exposure to the temperature load in a cold environment and in a reduction environment. The model parameters may be calculated based on the data on the variation in the shell temperature BTs measured, for example.

For example, the temperature load management device (20) may adjust the model parameters A1, A2, B1, B2, C1 and C2 in accordance with the attributes of users. For example, back data may be obtained based on the temperature load reduction model to calculate and set model parameters according to the attributes, such as age, sex, physique (e.g., weight, BMI, or the like), normal body temperature, and case history, of user groups. Accordingly, the air conditioning can be controlled based on the temperature load reduction model in accordance with the characteristics of users in, for example, an elementary school, an elderly facility, or in other places.

For example, the temperature load management device (20) may correct the load temperature TL in view of at least one of a humidity, a wind speed, or a radiation temperature in the first environment. The temperature load perceivable by a person varies depending on the humidity, the wind speed, the radiation temperature, and other factors. For example, in a case where the temperature environment applying the hot load is 30°C or higher, a change in the humidity from 50% to 70% makes the person feel about 1°C to 2°C higher than the actual temperature. Thus, under a hot load in a high-humidity environment, the reduction temperature TR or the reduction period t may be calculated by, for example, correcting the outdoor air temperature (i.e., the load temperature) TL to TLh and inputting the temperature TLh to the temperature load reduction model. TLh is a value in consideration of the humidity and obtained by the equation TLh = TL + $\gamma$, where $\gamma$ is a correction factor (about 1°C to 2°C) of the outdoor air temperature.

<Configuration of Air-Conditioning System>

For example, as shown in FIG. 4, the temperature load management device (20) and the air conditioner (30) may constitute the air-conditioning system (100). The air conditioner (30) conditions the air in the second environment (i.e., the reduction environment) for reducing the temperature load, based on the reduction temperature TR or the reduction period t output from the control unit (10) of the temperature load management device (20).

The air-conditioning system (100) controls the air conditioning based on the temperature load reduction model when the temperature is such a temperature (i.e., the load temperature TL) that applies an intense temperature load mainly in a hot environment or a cold environment (i.e., the first environment). For example, the air conditioning may be controlled based on the temperature load reduction model when the outdoor air temperature is, for example, 31°C or more in summer and 10°C or less in winter. On the other hand, for example, the air conditioning may be controlled with a gentle temperature gradient around normal temperature (i.e., 25°C to 28°C in summer) when the outdoor air temperature is in a range of from about 20°C to about 30°C. For example, the air conditioning may be controlled with a gentle temperature gradient around normal temperature (i.e., 18°C to 22°C in winter) when the outdoor air temperature is in a range of from about 10°C to about 20°C.

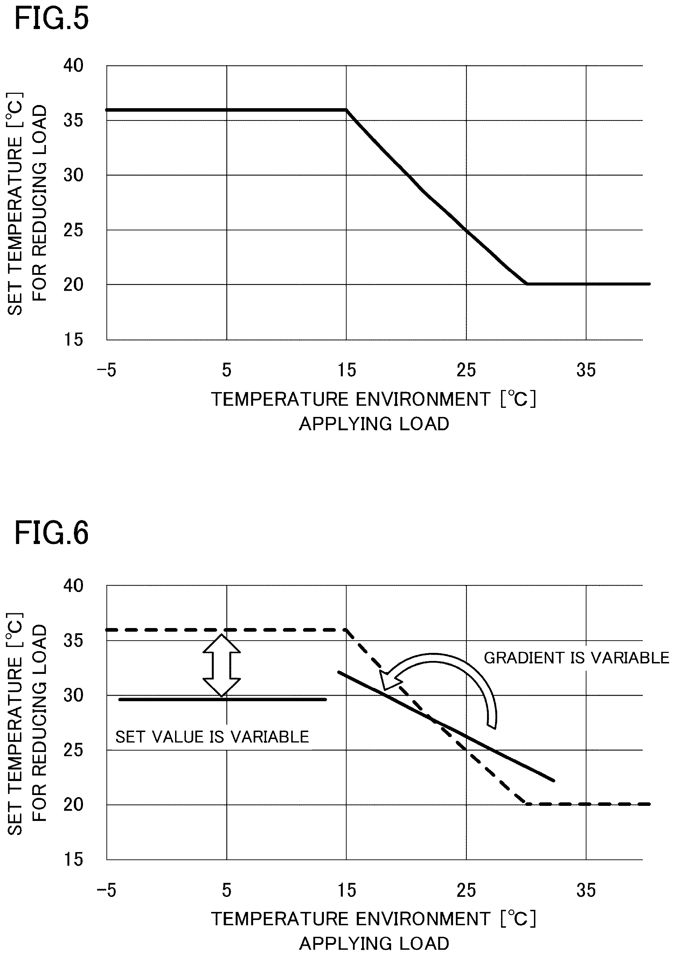

For example, the air-conditioning system (100) may further include an adjuster (40) configured to allow the user to change the reduction temperature TR or the reduction period t output from the control unit (10). In other words, for example, the user may manually change the reduction temperature TR or the reduction period t to a specific value through a remote control of the air conditioner (30) or the like. FIG. 5 shows an example relationship, obtained by the temperature load reduction model, between the reduction temperature TR (i.e., a set temperature for reducing a temperature load) and the load temperature TL (i.e., the ambient temperature applying the load). FIG. 6 schematically shows that the reduction temperature or its gradient shown in FIG. 5 is changed by a user to a specific value or gradient.

For example, the air-conditioning system (100) may further include a detector (50), such as a thermography, configured to detect the shell temperature BTs of the user. In this case, if a difference between the shell temperature BTs detected by the detector (50) and the target value exceeds a first predetermined value (e.g., 2°C), the air conditioner (30) may, for example, change the reduction temperature TR so that a difference between the reduction temperature TR and normal temperature is lower than or equal to a second predetermined value (e.g., 5°C) or may issue an alert to the user to stop the exposure to the second environment (i.e., the reduction environment). This configuration substantially prevents an excessive increase in the variation in the body temperature of the user. For example, the alert information may be transmitted to, for example, a mobile terminal of an individual user which is compatible with a network and registered in advance.

For example, the air-conditioning system (100) may further include a measurement device (or a sensing unit) configured to measure, for example, an extreme environmental temperature (i.e., outdoor air temperature) causing a load on the user. For example, the sensing unit may measure the outdoor air temperature and room temperature (i.e., the ambient temperature of the user). Using this information measured, the control unit (10) may output the reduction temperature TR or the reduction period t, based on the temperature load reduction model. Based on this output value, the air conditioner (30) may provide cool air or warm air to the reduction environment.

For example, the air-conditioning system (100) may serve as an indoor air-conditioning system for a closed space, such as a rest room, and is configured to control the temperature of the entire space to be the reduction temperature TR. Such a rest room (i.e., break room) can relieve a person who has come from the outside on a very hot day (or a very cold day) of a temperature load before the person starts working indoors.

For example, the air-conditioning system (100) may serve as an air-conditioning system for an open space, such as a local indoor space where cool air or warm air is provided from an entrance wall, and is configured to control the temperature of such a space to the reduction temperature TR.

For example, the air-conditioning system (100) may be configured to be usable outdoors and movable and temporarily installable. In this case, the air-conditioning system (100) may, for example, serve as a closed air-conditioned room, such as a temporary rest room, or an air-conditioning system for an open space capable of local cooling or heating, such as a temporary cool air blower or a temporary warm air blower.

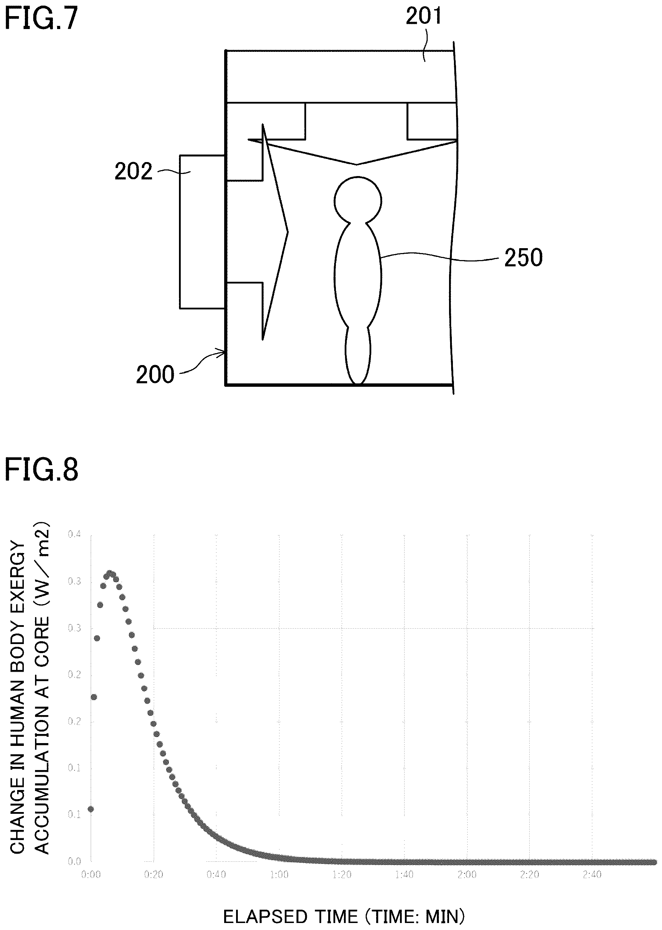

When serving as an air-conditioning system for an open space indoors and/or outdoors, the air-conditioning system (100) needs to provide the user (250) with air in a state greatly different from the air in the place (200) of use, as shown in FIG. 7. In this case, air-conditioning control may be performed, regarding only the ambient environment of the user (250) as the reduction environment. Accordingly, in order to improve the local air conditioning effects, air may be, for example, blown vertically downward toward the head of the user (250) from an air outlet (201) provided above the place (200) of use, or horizontally toward the front of the user (250) from an air outlet (202) provided at a lateral position of the place (200) of use.

The parameters of the temperature load reduction model used in the temperature load management device (20) are calculated on the assumption of a closed space, such as a room, at a constant temperature. However, the air-conditioning system (100) for an open space provides the user with cool air, warm air, or any other type of air directly from the air conditioner (30) near the user. In this case, the reduction temperature TR set by the temperature load reduction model may be, for example, a temperature at a position that is, for example, one meter away from the air outlet of the air conditioner (30) toward the user. In addition, for example, the target value of the shell temperature BTs serving as a criterion for load reduction may be, for example, set to be lower by, for example, 0.5°C in the case of a hot load and to be higher by, for example, 0.5°C, in the case of a cold load, compared to when assuming a closed space, such as a room.

The air-conditioning system (100) for an open space needs to provide air with a temperature significantly different from the outdoor air temperature (i.e., the load temperature TL). Thus, in constant operation, the air-conditioning system (100) for an open space requires higher costs. Accordingly, the air-conditioning system (100) may be configured to operate automatically when an object sensor or the like senses the approach of the user to the air outlet of the air conditioner (30). In this case, a certain amount of cool air or warm air may be circulated in the air conditioner (30) while the air-conditioning system (100) is out of operation so that once the air-conditioning system (100) starts to operate, the cool air or warm air can be provided immediately, thereby reducing costs for temperature control.

The reduction temperature TR set as the target temperature of the air-conditioning control by the air-conditioning system (100) has a large temperature difference from the load temperature TL (e.g., the outdoor air temperature), whereas the period of use (i.e., the reduction period t) of the reduction temperature TR is limited to about 5 minutes to 15 minutes, for example. Accordingly, it is effective to adjust the temperature in as short a time as possible for cost reduction. In order to achieve this, for example, the air-conditioning system (100) may have a remote-control function through a network. Specifically, for example, the temperature in the reduction environment, such as a room, may be adjusted to the reduction temperature TR rapidly in a short time period in accordance with the scheduled time of entry into the room set by remote-control operation.

For example, the air-conditioning system (100) may further include a sensor (60), such as an object sensor, configured to sense entry of the user into the reduction environment, such as a room. In this case, for example, the air-conditioning system (100) may perform air-conditioning control based on the temperature load reduction model only when the sensor (60) senses the entry of the user into the reduction environment. For example, the air conditioner (30) may end the air conditioning with the reduction temperature TR at the time when the reduction period t has elapsed since the sensor (60) sensed the entry of the user into the reduction environment. For example, the air conditioner (30) may automatically return the temperature in the reduction environment to a suitable temperature (e.g., around 26°C to 28°C) when the reduction period t (e.g., 10 minutes to 15 minutes) set by the temperature load reduction model has elapsed since an object sensor or the like sensed the entry of a person into a room around the scheduled time of the entry set by the remote control operation described above.

-Advantages of First Embodiment-

The temperature load management device (20) according to this embodiment is for use in exposing a user to a second environment for reducing a temperature load accumulated in the user in a first environment. The temperature load management device (20) includes the control unit (10) as a main component. The control unit (10) sets a shell temperature BTs of the user to a target value, based on a correlation (i.e., the temperature load reduction model) among the shell temperature BTs of the user, a load temperature TL which is a temperature of the first environment, a reduction temperature TR which is a temperature of the second environment, and a reduction period t for exposing the user to the second environment. The control unit (10) receives as inputs the load temperature TL and one of the reduction temperature TR or the reduction period t, and outputs the other of the reduction temperature TR or the reduction period t. It is therefore possible to obtain the reduction temperature TR or the reduction period t for reducing the temperature load based on the load temperature TL so that the shell temperature BTs of the user will be the target value. The second environment is air-conditioned based on this reduction temperature TR or reduction period t, thereby making it possible to promote the heat exchange between the skin temperature and the core body temperature and quickly reduce the influence of the temperature load on the mind and body of the user. Specifically, a decrease in the parasympathetic nerve activity of the user, excessive sweating leading to dehydration, a higher heart rate in a hot environment, or the like can be reduced. It is also possible to reduce a decrease in the thermoregulatory function represented by a decrease in the amount of sweating or other results of excessive sweating caused by a long-term exposure to a hot environment. Reduction in such a temperature load at an early stage can lead to an improvement in the work efficiency at the start of indoor work, for example.

For example, the temperature load management device (20) according to this embodiment may use, as the temperature load reduction model, the model represented by Equations (1) to (3). According to this configuration, it is possible to obtain the correlation among the shell temperature BTs of the user, the load temperature TL, the reduction temperature TR, and the reduction period t through experimental calculation of the model parameters in advance. That is, the temperature load reduction model for a hot environment and the temperature load reduction model for a cold environment can be easily constructed.

For example, the temperature load management device (20) according to this embodiment may set the model parameters in consideration of clothes worn by a user when the first environment is a hot environment or a cold environment. According to this configuration, it is possible to obtain more accurately the reduction temperature TR or the reduction period t for reducing the influence of the temperature load caused by a cold environment.

In the temperature load management device (20) according to this embodiment, the model parameter may be, for example, adjusted in accordance with the attribute of the user. According to this configuration, it is possible to obtain a suitable reduction temperature TR or a suitable reduction period t for reducing the influence of the temperature load in accordance with the attribute of the user.

For example, the temperature load management device (20) according to this embodiment may correct the load temperature TL in view of at least one of a humidity, a wind speed, or a radiation temperature in the first environment. According to this configuration, it is possible to obtain more accurately the reduction temperature TR or the reduction period t for reducing the influence of the temperature load through correct evaluation of the load temperature TL.

The air-conditioning system (100) according to this embodiment includes the temperature load management device (20) and the air conditioner (30) as main components. The air conditioner (30) conditions the air in the second environment, based on the reduction temperature TR or the reduction period t output from the control unit (10) of the temperature load management device (20). In this manner, the air conditioner (30) conditions the air in the second environment, based on the reduction temperature or the reduction period output from the control unit (10), thereby making it possible to promote the heat exchange between the skin temperature and the core body temperature and quickly reduce the influence of the temperature load on the mind and body of the user.

For example, the air-conditioning system (100) according to this embodiment may serve as an air-conditioning system for an outdoor space. According to this configuration, it is possible to reduce the accumulation of the temperature load on the user during outdoor work, reduce the body temperature and the amount of sweating at an early stage, and thereby reduce the risk of heat stroke.

For example, the air-conditioning system (100) according to this embodiment may further include the adjuster (40) configured to allow the user to change the reduction temperature TR or the reduction period t output from the control unit (10). According to this configuration, it is possible to condition the air in the second environment for reducing the temperature load in accordance with the preferences of the user.

For example, the air-conditioning system (100) according to this embodiment may further include the detector (50) configured to detect the shell temperature BTs of the user. In this case, if a difference between the shell temperature BTs detected by the detector (50) and the target value exceeds a first predetermined value, the air conditioner (30) may, for example, change the reduction temperature TR so that a difference between the reduction temperature TR and normal temperature is lower than or equal to a second predetermined value or may issue an alert to the user to stop the exposure to the second environment. According to this configuration, it is possible to mitigate heat shock and/or avoid too-cold air.

For example, the air-conditioning system (100) according to this embodiment may further include the sensor (60) configured to sense entry of the user into the second environment. In this case, for example, the air conditioner (30) may end the air conditioning with the reduction temperature TR at the time when the reduction period t has elapsed since the sensor (60) sensed the entry of the user into the second environment. According to this configuration, it is possible to reduce the costs for the air conditioning with the reduction temperature TR.

<<Second Embodiment>>

<Human Body Exergy Model Relating to Temperature Load>

It is known that if a person who has been exposed to a hot environment puts themselves in a low-temperature environment, where the temperature is lower than or equal to normal temperature, even in a short time period to remove a thermal load, the person is relieved of negative influences on the mind and body and regains concentration. That is, with the thermal stress inside the body reduced quickly, mental and physical stress is less likely to continue, and the person feels refreshed more easily.

Thus, while a person is being exposed to an extreme temperature environment, or when a person goes indoors, the influence of the temperature load can be reduced by air-conditioning control which temporarily provides a temperature environment that is opposite, with respect to normal temperature, to the temperature environment that has forced physical and mental burdens. The opposite temperature environment specifically is an environment where the temperature is lower than or equal to normal temperature in the case of a load due to a hot environment, or an environment where the temperature is higher than or equal to normal temperature in the case of a load due to a cold environment.

The present inventors have arrived at the invention in which the thermal stress from a hot environment is estimated by a human body exergy theory. As will be described in detail below, the human body exergy may be calculated using environmental information (e.g., an indoor temperature [°C], a relative humidity [%], a wall surface temperature [°C], a wind speed [m/s], an outdoor air temperature [°C], an outdoor air humidity [%]) in addition to the amount of clothes [clo] and the amount of exercise [met] of the person. Using the calculation result, the temperature of the restoration environment (i.e., the environment for removing the temperature load accumulated in a hot environment or a cold environment) and period of use (i.e., time to end the exposure of the person to the restoration environment) may be set, for example. The human body exergy accumulation is included in the following equation related to a human body exergy balance.

$$[\text{Human Body Exergy Input}] - [\text{Human Body Exergy Consumption}] = [\text{Human Body Exergy Accumulation}] + [\text{Human Body Exergy Output}]$$

In the equation, the human body exergy input, the human body exergy consumption, the human body exergy accumulation, and the human body exergy output are parameters representing the speed of generation, consumption, accumulation, and release of the exergy determined per surface of 1 $m^2$ of the human body. The unit of each parameter is $W/m^2$.

The human body exergy input is mainly the exergy generated inside the body and the exergy taken into the body from the outside of the body, and is caused by the heat generated by metabolism, inhalation, and the radiant heat absorbed by clothes.

The human body exergy consumption is the exergy consumed inside the body and is caused by thermal diffusion due to a temperature difference inside the human body, thermal diffusion due to a temperature difference between the human body and clothes, and mutual diffusion between the sweat and the air due to a vapor pressure difference between the human body and the clothes.

The human body exergy accumulation is the exergy accumulated inside the body in accordance with the surrounding environment, and tends to increase in a hot environment and decrease in a cold environment.

The human body exergy output is the exergy released from the inside to the outside of the body, and is mainly caused by exhalation, diffusion of the moist air generated after the evaporation of sweat, and the radiant heat released by the clothes.

An example reference on a human body exergy balance is, for example, "Theory of Exergy and Environment-What Is Design of Flow and Circulation [Revised Edition] (compiled and written by Masanori Shukuya)".

<Temperature Load Elimination Model Using Human Body Exergy Accumulation>

The temperature load means a thermal stress under which the thermoregulatory function works due to a hot or cold stimulus that hinders the maintenance of a human body temperature, and is distinguished from heat itself accumulated in a human. When, for example, a human body dissipates heat through sweating at a temperature of 30°C to keep the body temperature, no more heat is accumulated. However, the thermal stress is not zero, and a load is applied to the body due to sweating or any other cause. The temperature and period of use of the restoration environment against such a load are calculated as follows.

First, the thermal stress (i.e., the first temperature load) applied to a subject from an environment is calculated as follows. It is known from the reference described above, for example, that the human body exergy accumulation at the core per unit time can be calculated as a function of the period t of exposure to the environment, using environmental information as an input. On the basis of a simulation result obtained based on this finding, a change in the total amount ST(t) of the human body exergy accumulation at the core with respect to the period t of stay at each temperature TE, to which the user is exposed, is obtained as an approximate equation as follows in the present disclosure.

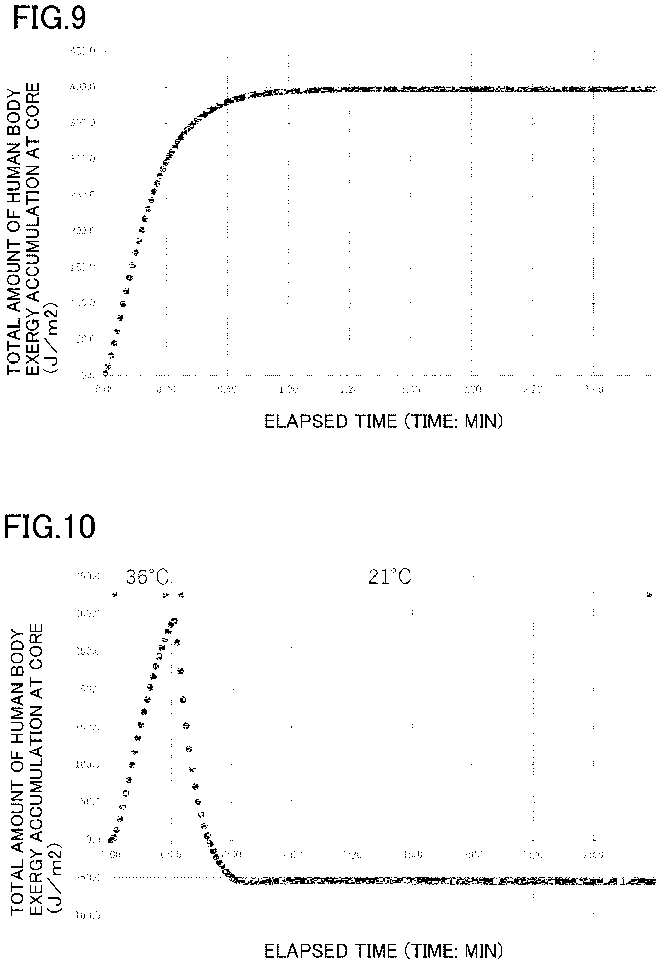

For example, in a case where a model formula shown in the reference described above is applied, and a subject who is in a thermally balanced state in an environment of the temperature of 26°C moves to a hot environment of the temperature of 36°C, the human body exergy accumulation $\Delta ST(Th)$ at the core per unit time changes as shown in FIG. 8, using a period Th of exposure to the hot environment (in FIG. 8, the unit of the vertical axis is $W/m^2$ and the unit of the horizontal axis is minutes). The total amount ST of the human body exergy accumulation at the core is as shown in FIG. 9 (in FIG. 9, the unit of the vertical axis is $J/m^2$ and the unit of the horizontal axis is minutes).

The simulation result in FIG. 9 is approximated by a sigmoid function of the period Th of exposure to a hot environment, which is expressed by the following Equation (5).

[Math 1]

$$ST(Th) = \frac{679.32}{1 + e^{-0.1027(Th - 4.344)}} - 279.03$$

$$\ldots \text{Equation (5)}$$

In Equation (5), e is the Napier's constant which is the base of the natural logarithms. Th is zero or more.

Similarly, if a subject who is in a thermally balanced state in an environment of the temperature of 26°C moves to a hot environment of the temperature of 36°C, is exposed to the hot environment for 20 minutes, and thereafter moves to a restoration environment of 21°C, the total amount ST of the human body exergy accumulation at the core changes as shown in FIG. 10. Of the simulation result of FIG. 10, ST at time 0:20 (i.e., 20 minutes) or later is approximated by a sigmoid function of the period Tc of exposure to the restoration environment, which is expressed by the following Equation (6).

[Math 2]

$$ST(Tc) = \frac{-624.96}{1+e^{-0.2289(Tc-1.007)}} + 573.15$$

$$\dots \text{Equation (6)}$$

In Equation (6), e is the Napier's constant which is the base of the natural logarithms. Tc is zero or more.

Here, Tc is set to be a value that satisfies the equation ST (= ST(Th) + ST(Tc)) < 0, so that the accumulation amount of the first temperature load in the hot environment can be expected to be canceled by the accumulation amount of the second temperature load in the restoration environment.

For example, in the case shown in FIG. 10, the minimum Tc (i.e., period of use of the restoration environment) that satisfies ST < 0 is calculated as 11.6 minutes, using Equation (6).

In this manner, for example, the approximate equations such as those described above on various temperatures and exposure periods may be set and stored in advance, and the periods of use of the restoration environment may be calculated by using these approximate equations. In the above description, the necessary period of use is determined by selecting the temperature of the restoration environment for the first temperature load, but another approximate model may be used to calculate more detailed and continuous set temperatures and periods of use, for example.

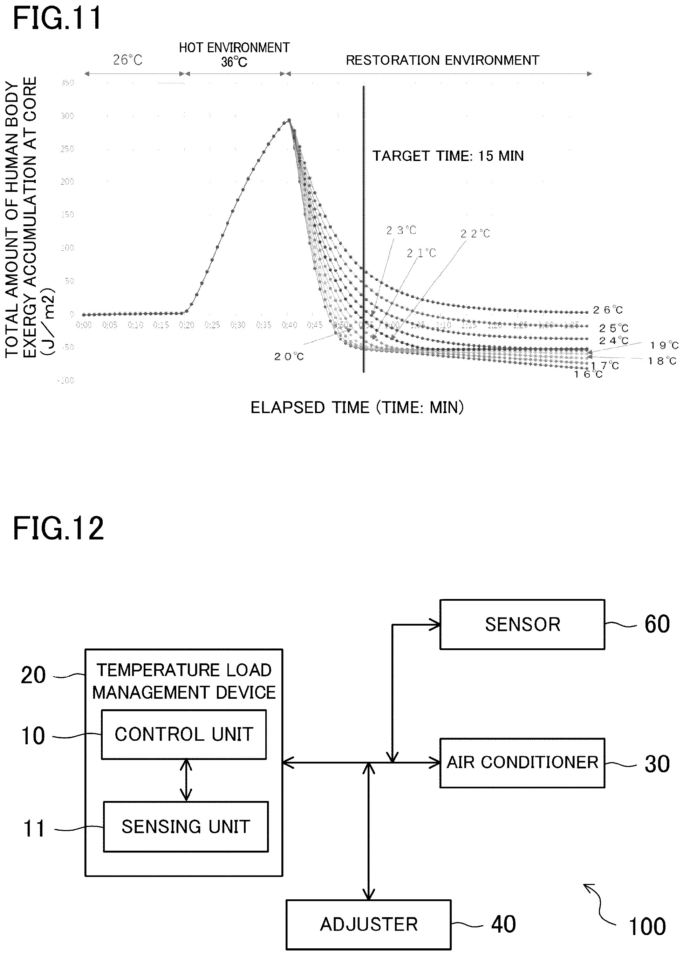

The total amount ST of the human body exergy accumulation at the core in a restoration environment is simulated in advance with various temperatures TEc of the restoration environment against the temperature and period applying the first temperature load. This makes it possible to obtain a suitable period of exposure (i.e., period of use). For example, assuming that a subject who is in a thermally balanced state in an environment of the temperature of 26°C is exposed to a hot environment of the temperature of 36°C for 20 minutes, the total amount ST of the human body exergy accumulation at the core in a restoration environment is simulated in advance with various temperatures TEc. The results are shown in FIG. 11 (in FIG. 11, the unit of the vertical axis is J/m$^2$ and the unit of the horizontal axis is minutes). It can be derived from the results shown in FIG. 11 that the expression ST < 0 is satisfied within the target time of 15 minutes if TEc is 22°C or less.

How to calculate the human body exergy in Equations (5) and (6) is not limited. For example, the exergy may be directly calculated by substituting parameters (e.g., a temperature or a relative humidity) included in input environmental conditions into a predetermined mathematical formula. Alternatively, the exergy may be calculated from input environmental conditions, using a predetermined algorithm. Alternatively, a table, a database, or the like linking environmental conditions and exergy to each other is created in advance, and the exergy may be calculated based on input environmental conditions.

For example, model items related to a user, such as the metabolic rate and the amount of exercise, included in the exergy model may be estimated from physiological information (e.g., the skin temperature, sweating, heart rate, and blood flow rate) of a person.

In the foregoing example calculation, how to calculate the temperature and the period of use of a restoration environment (i.e., a low-temperature environment) against a hot environment has been described. Similarly, the temperature and the period of use of a restoration environment (i.e., a high-temperature environment) against a cold environment can also be calculated, using a model formula constructed by simulating in advance the temperature of the temperature load and the period of exposure.

<Configuration of Temperature Load Management Device>

FIG. 12 is a block diagram of a configuration of an air-conditioning system (100) including the temperature load management device (20) according to the second embodiment. The temperature load management device (20) according to this embodiment is for use in exposing a user to a second environment (i.e., a restoration environment) for reducing a temperature load (i.e., a first temperature load) accumulated in the user in a first environment (i.e., a hot environment or a cold environment).

As shown in FIG. 12, the temperature load management device (20) includes a control unit (10) as a main component. The control unit (10) controls the restoration environment through an air conditioner (30), which will be described later, based on physiological information on the user, or makes a notification of a time to end the user's exposure to (or period of use of) the restoration environment based on physiological information on the user.

The physiological information is not limited but may be, for example, at least one of a metabolic rate, a skin temperature, a core temperature, an amount of sweating, a blood vessel diameter, a blood flow rate, a heart rate, a heart rate variability, or a respiration rate.

The target of control in the restoration environment is not limited but may be at least one of a temperature, a humidity, a radiation temperature, or an airflow, for example.

The temperature load management device (20) includes a computer, such as a microcomputer, configured to execute programs to perform the function of the control unit (10), that is, the temperature load management method according to this embodiment. The computer includes, as a main hardware configuration, a processor that operates in accordance with programs. The processor may be of any type as long as the processor can perform the functions by executing programs and may include one or more electronic circuits including a semiconductor integrated circuit (IC) or a large-scale integration (LSI) circuit, for example. For example, the plurality of electronic circuits may be integrated on one chip or provided on a plurality of chips. For example, the plurality of chips may be integrated into one device or provided in a plurality of devices. The programs are recorded in a non-transitory recording medium, such as a computer-readable ROM, an optical disk, or a hard disk drive. For example, the programs may be stored in advance in the recording medium, or may be supplied to the recording medium via a wide area communication network, such as the Internet.

For example, the temperature load management device (20) may further include a sensing unit (11) configured to detect the physiological information on a user. For example, the sensing unit (11) may be of a bracelet type worn by the user and may be a sensor for measuring body temperatures at a plurality of points. In place of the sensing unit (11) included in the temperature load management device (20), for example, a detection device configured separately from the temperature load management device (20) may detect the physiological information on the user and transmit the detected physiological information to the temperature load management device (20).

For example, the temperature load management device (20) may further include a storage unit configured to store the physiological information on the user. If the temperature load management device (20) has a storage unit, the storage unit may be, for example, a computer-readable and writable recording medium, such as a RAM.

For example, the temperature load management device (20) may further include an input unit and/or a display unit for inputting necessary information and outputting the temperature or period of use of the restoration environment or other information. If the temperature load management device (20) has an input unit, the input unit may be, for example, a keyboard, a mouse, a touch pad, or the like. If the temperature load management device (20) has a display unit, the display unit may be, for example, a monitor, such as a CRT or a liquid crystal display, capable of displaying images.

For example, the temperature load management device (20) may further include a measurement unit configured to measure an outdoor air temperature that serves as the temperature of a hot environment or a cold environment. If the temperature load management device (20) has a measurement unit, the measurement unit may be, for example, a temperature sensor carried by a user, or temperature sensors provided at a plurality of points (e.g., a room, a public institution, or outdoors). In the latter case, the temperature around the user is calculated based on temperature history data measured by the temperature sensors provided at the plurality of points and movement history data on the user. For example, the movement history data on the user may be stored in advance, or may be set and input by the user as appropriate or based on the schedule of the day. For example, the temperature load management device (20) may use, as the outdoor air temperature, outdoor air temperature information, such as AMeDAS, obtained from the Internet.

How to mount the temperature load management device (20) is not limited. For example, the temperature load management device (20) may be mounted on a remote control of an air conditioner (30) which will be described later. In this case, the temperature load management device (20) may be configured using, for example, a microcomputer, a memory, a touch panel, or any other suitable element mounted on the remote control.

In the temperature load management device (20), for example, the control unit (10) may control the restoration environment or make a notification of the period of use of the restoration environment in accordance with the accumulation of first human body exergy accumulated in the user at the first temperature load.

In the temperature load management device (20), for example, the control unit (10) may set the temperature or period of use of the restoration environment, based on the accumulation of the first human body exergy and the accumulation of second human body exergy that is accumulated at a second temperature load, which is opposite to the first temperature load, and is necessary to cancel the accumulation of the first human body exergy. In this case, for example, the temperature or period of use of the restoration environment may be calculated based on the model equations as shown in Equations (5) and (6) using the exergy accumulated in the human body.

<Configuration of Air-Conditioning System>

As shown in FIG. 12, for example, the temperature load management device (20) and the air conditioner (30) may constitute the air-conditioning system (100). The air conditioner (30) conditions the air in the restoration environment, based on the temperature or period of use of the restoration environment set by the control unit (10) of the temperature load management device (20).

In the air-conditioning system (100), for example, the temperature load management device (20) may perform air-conditioning control if it is at a temperature applying an intense temperature load mainly in a hot environment or a cold environment (i.e., if the outdoor air temperature is 31°C or more in summer and 10°C or less in winter). On the other hand, for example, the air conditioning may be controlled with a gentle temperature gradient around normal temperature (i.e., 25°C to 28°C in summer) when the outdoor air temperature is in a range of from about 20°C to about 30°C. For example, the air conditioning may be controlled with a gentle temperature gradient around normal temperature (i.e., 18°C to 22°C in winter) when the outdoor air temperature is in a range of from about 10°C to about 20°C.

For example, the air-conditioning system (100) may further include an adjuster (40) configured to allow the user to change the temperature or period of use of the restoration environment set by the control unit (10). In other words, for example, the user may manually change the temperature or period of use of the restoration environment to a specific value through a remote control of the air conditioner (30) or the like.

For example, the air-conditioning system (100) may further include a measurement device (or a sensing unit) configured to measure, for example, an extreme environmental temperature (i.e., outdoor air temperature) causing a load on the user. For example, the sensing unit may measure the outdoor air temperature and room temperature (i.e., the ambient temperature of the user). Using this information measured, the control unit (10) may set the temperature or period of use of the restoration environment. Based on this set value, the air conditioner (30) may provide cool air or warm air to the restoration environment.

For example, the air-conditioning system (100) may serve as an indoor air-conditioning system for a closed space, such as a rest room, and is configured to control the temperature of the entire room. Such a rest room (i.e., break room) can relieve a person who has come from the outside on a very hot day (or a very cold day) of a temperature load.

For example, the air-conditioning system (100) may serve as an air-conditioning system for an open space, such as a local indoor space where cool air or warm air is provided from an entrance wall, and is configured to control the temperature of such a space.

For example, the air-conditioning system (100) may be configured to be usable outdoors and movable and temporarily installable. In this case, the air-conditioning system (100) may, for example, serve as a closed air-conditioned room, such as a temporary rest room, or an air-conditioning system for an open space capable of local cooling or heating, such as a temporary cool air blower or a temporary warm air blower.

When serving as an air-conditioning system for an open space indoors and/or outdoors, the air-conditioning system (100) needs to provide the user with air in a state greatly different from the air in the place of use. In this case, air-conditioning control may be performed, regarding only the ambient environment of the user as the restoration environment. Accordingly, in order to improve the local air conditioning effects, air may be, for example, blown vertically downward toward the head of the user from an air outlet provided above the place of use, or horizontally toward the front of the user from an air outlet provided at a lateral position of the place of use.

The air-conditioning system (100) for an open space needs to provide air with a temperature significantly different from the outdoor air temperature. Thus, in constant operation, the air-conditioning system (100) for an open space requires higher costs. Accordingly, the air-conditioning system (100) may be configured to operate automatically when an object sensor or the like senses the approach of the user to the air outlet of the air conditioner (30). In this case, a certain amount of cool air or warm air may be circulated in the air conditioner (30) while the air-conditioning system (100) is out of operation so that once the air-conditioning system (100) starts to operate, the cool air or warm air can be provided immediately, thereby reducing costs for temperature control.

The target temperature (i.e., the temperature of the restoration environment) of the air-conditioning control by the air-conditioning system (100) has a large temperature difference from the load temperature (e.g., the outdoor air temperature). On the other hand, the period of use of the restoration environment is limited to about 5 minutes to 15 minutes, for example. Accordingly, it is effective to adjust the temperature in as short a time as possible for cost reduction. In order to achieve this, for example, the air-conditioning system (100) may have a remote-control function through a network. Specifically, for example, the temperature in the restoration environment, such as a room, may be adjusted to the target temperature rapidly in a short time period in accordance with the scheduled time of entry of the user into the room set by remote-control operation.

For example, the air-conditioning system (100) may further include a sensor (60), such as an object sensor, configured to sense entry of the user into the restoration environment, such as a room. In this case, for example, the air-conditioning system (100) may perform air-conditioning by the temperature load management device (20) only when the sensor (60) senses the entry of the user into the restoration environment. For example, the air conditioner (30) may end the air conditioning using the temperature load management device (20) at the time when the period of use set by the temperature load management device (20) has elapsed since the sensor (60) sensed the entry of the user into the restoration environment. For example, the air conditioner (30) may automatically return the temperature in the restoration environment to a suitable temperature (e.g., around 26°C to 28°C) when the period of use (e.g., 10 minutes to 15 minutes) set by the temperature load management device (20) has elapsed since an object sensor or the like sensed the entry of a person into a room around the scheduled time of the entry set by the remote control operation described above.

-Advantages of Second Embodiment-

The temperature load management device (20) according to this embodiment is for use in exposing a user to a second environment (i.e., a restoration environment) for reducing a first temperature load accumulated in a first environment (i.e., a hot environment or a cold environment). The temperature load management device (20) includes a control unit (10) as a main component. The control unit (10) controls the restoration environment based on physiological information on the user, or makes a notification of a time to end the user's exposure to the restoration environment (i.e., period of use of the restoration environment) based on physiological information on the user.

The temperature load management device (20) according to this embodiment controls the restoration environment for removing the first temperature load accumulated in the first environment or makes a notification of the period of use of the restoration environment, based on the physiological information on the user. Accordingly, the temperature or period of use of the restoration environment can be set in accordance with the user. It is therefore possible to avoid diseases, such as heat stroke, caused by thermal stress.

In the temperature load management device (20) according to this embodiment, for example, the control unit (10) may control the restoration environment or make a notification of the period of use of the restoration environment in accordance with first human body exergy accumulation that is accumulated in the user at the first temperature load. For example, the control unit (10) may control the restoration environment or provide other control in accordance with the accumulation of the first human body exergy that is accumulated in a user who has been subjected to a hot load in a hot environment and is accumulated due to the hot load. It is therefore possible for the user to use the restoration environment more appropriately.

In the temperature load management device (20) according to this embodiment, for example, the control unit (10) may set the temperature or period of use of the restoration environment, based on the accumulation of the first human body exergy and the accumulation of the second human body exergy that is accumulated at a second temperature load, which is opposite to the first temperature load, and is necessary to cancel the accumulation of the first human body exergy. In this method, for example, the accumulation of the first human body exergy accumulated in the user in a hot environment and the accumulation of the second human body exergy that is accumulated at a cold load and is necessary to cancel the accumulation of the first human body exergy accumulated at the hot load are obtained. These accumulations of the human body exergy allow setting of the temperature and/or period of use of the restoration environment suitable for the user.

For example, the temperature load management device (20) according to this embodiment may further include the sensing unit (11) configured to detect the physiological information on the user. This configuration allows the control of the restoration environment or other control using the physiological information on the user detected by the sensing unit (11).

In the temperature load management device (20) according to this embodiment, for example, the sensing unit (11) may be a bracelet type worn by the user and may be a sensor for measuring body temperatures at a plurality of points. This configuration facilitates the detection of the physiological information, such as the amount of sweating or the heart rate, on the user.

In the temperature load management device (20) according to this embodiment, for example, the physiological information may be at least one of a metabolic rate, a skin temperature, a core temperature, an amount of sweating, a blood vessel diameter, a blood flow rate, a heart rate, a heart rate variability, or a respiration rate. This configuration allows the use of the physiological information related to the temperature load accumulated in the user.

In the temperature load management device (20) according to this embodiment, for example, the target of control in the restoration environment may be at least one of a temperature, a humidity, a radiation temperature, or an airflow. It is therefore possible to remove the temperature load from the user by the control of the restoration environment.

<<Other Embodiments>>

The first embodiment employs the temperature load reduction model expressed by Equations (1) to (3). The temperature load reduction model is not limited thereto as long as it is a model expressing the correlation among the shell temperature BTs, the load temperature TL, the reduction temperature TR, and the reduction period t.

In the second embodiment, the temperature load management device (20) sets the temperature and/or period of use of the restoration environment, based on the exergy accumulated in the body of the user. Instead, for example, the temperature load management device (20) may correct the temperature and/or period of use of the restoration environment, based on another index according to the physiological information on the user. For example, another parameter in correlation with the degree of expansion and contraction of blood vessels of the user, a parameter representing the balance between the sympathetic nerve and the parasympathetic nerve, or other parameters may be used. Examples of such parameters may include LF/HF, which is the ratio between a low-frequency (LF) component and a high-frequency (HF) component of variations in the breathing or heart rate of the user. The ratio LF/HF has a correlation with the degree of expansion and contraction of blood vessels. In this case, for example, the temperature load management device (20) may acquire the value LF/HF using, for example, a device configured to measure the pulse wave of the user.

For example, assume that a user who has been subjected to a temperature load in a hot environment is exposed to a cool restoration environment to remove the temperature load. In this case, the temperature load management device (20) may, for example, end the exposure of the user to the restoration environment when the temperature load management device (20) detects that the blood flow rate of a peripheral blood vessel of a hand or another part of the user has decreased to a predetermined value or less.

In the second embodiment, the temperature load management device (20) and the air conditioner (30) constitute the air-conditioning system (100), and the temperature load management device (20) controls the restoration environment through the air conditioner (30). Instead, for example, the temperature load management device (20) itself may have an air-conditioning function which is used to control the restoration environment.

While the embodiments have been described above, it will be understood that various changes in form and details can be made without departing from the spirit and scope of the claims. The foregoing embodiments and variations may be appropriately combined or replaced as appropriate. In addition, the expressions of "first," "second," ... described above are used to distinguish the terms to which these expressions are given, and do not limit the number and order of the terms.

INDUSTRIAL APPLICABILITY

The present disclosure is useful as a temperature load management device and a temperature load management method.

DESCRIPTION OF REFERENCE CHARACTERS

10    Control Unit

11    Sensing Unit

20    Temperature Load Management Device

30    Air Conditioner

40    Adjuster

50    Detector

60    Sensor

100    Air-Conditioning System

Claims

1. A temperature load management device (20) for use in exposing a user to a second environment for removing a first temperature load accumulated in a first environment, the temperature load management device comprising:
   a control unit (10) configured to control the second environment or make a notification of a time to end the exposing, based on physiological information on the user.

2. The temperature load management device of claim 1, wherein
   the control unit (10) sets a shell temperature of the user to a target value, based on a correlation among the shell temperature of the user, a load temperature which is a temperature of the first environment, a reduction temperature which is a temperature of the second environment, and a reduction period for exposing the user to the second environment, the control unit (10) being configured to receive as inputs the load temperature and one of the reduction temperature or the reduction period, and output the other of the reduction temperature or the reduction period.

3. The temperature load management device of claim 2, wherein

the correlation is expressed by:

$$BTs(t) = \beta1 \times \ln(t) + \beta2;$$

$$\beta1 = A1 \times TR + B1 \times TL - C1;$$

and

$$\beta2 = A2 \times TR + B2 \times TL - C2,$$

where BTs is the shell temperature, TL is the load temperature, TR is the reduction temperature, t is the reduction period, ln is a natural logarithm, and A1, A2, B1, B2, C1, and C2 are model parameters.

4. The temperature load management device of claim 3, wherein

the first environment is a hot environment or a cold environment, and
the model parameters A1, A2, B1, B2, C1, and C2 are set in consideration of clothes worn by the user.

5. The temperature load management device of claim 3 or 4, wherein
the model parameters A1, A2, B1, B2, C1, and C2 are adjusted in accordance with an attribute of the user.

6. The temperature load management device of any one of claims 2 to 5, wherein
the load temperature is corrected in view of at least one of a humidity, a wind speed, or a radiation temperature in the first environment.

7. The temperature load management device of claim 1, wherein
the control unit (10) controls the second environment or makes the notification of the time in accordance with accumulation of first human body exergy accumulated in the user at the first temperature load.

8. The temperature load management device of claim 7, wherein
the control unit (10) sets a temperature of the second environment or the time, based on the accumulation of the first human body exergy and accumulation of second human body exergy that is accumulated at a second temperature load, which is opposite to the first temperature load, and is necessary to cancel the accumulation of the first human body exergy.

9. The temperature load management device of claim 1, 7, or 8, further comprising:
a sensing unit (11) configured to detect the physiological information.

10. The temperature load management device of claim 9, wherein
the sensing unit (11) is of a bracelet type worn by the user and a sensor for measuring body temperatures at a plurality of points.

11. The temperature load management device of any one of claims 1 and 7 to 10, wherein
the physiological information is at least one of a metabolic rate, a skin temperature, a core temperature, an amount of sweating, a blood vessel diameter, a blood flow rate, a heart rate, a heart rate variability, or a respiration rate.

12. The temperature load management device of any one of claims 1 and 7 to 11, wherein
a target of control in the second environment is at least one of a temperature, a humidity, a radiation temperature, or an airflow.

**13.** An air-conditioning system comprising:

the temperature load management device (20) of any one of claims 2 to 6; and
an air conditioner (30) configured to condition air in the second environment, based on the reduction temperature or the reduction period output from the control unit (10).

**14.** The air-conditioning system of claim 13, further comprising:
an adjuster (40) configured to allow the user to change the reduction temperature or the reduction period output from the control unit (10).

**15.** The air-conditioning system of claim 13 or 14, further comprising:

a detector (50) configured to detect the shell temperature, wherein
if a difference between the shell temperature detected by the detector (50) and the target value exceeds a first predetermined value, the air conditioner (30) changes the reduction temperature so that a difference between the reduction temperature and normal temperature is lower than or equal to a second predetermined value, or issues an alert to the user to stop the exposure to the second environment.

**16.** The air-conditioning system of any one of claims 13 to 15, further comprising:

a sensor (60) configured to sense entry of the user into the second environment, wherein
the air conditioner (30) ends the air conditioning with the reduction temperature at a time when the reduction period has elapsed since the sensor (60) sensed the entry of the user into the second environment.

**17.** A temperature load management method for use in exposing a user to a second environment for removing a first temperature load accumulated in a first environment, the temperature load management method comprising:
controlling the second environment or making a notification of a time to end the exposing, based on physiological information on the user.

**18.** The temperature load management method of claim 17, further comprising:
setting a shell temperature of the user to a target value, based on a correlation among the shell temperature of the user, a load temperature which is a temperature of the first environment, a reduction temperature which is a temperature of the second environment, and a reduction period for exposing the user to the second environment;
receiving as inputs the load temperature and one of the reduction temperature or the reduction period; and outputting the other of the reduction temperature or the reduction period.

**19.** A computer program for causing a computer to execute the temperature load management method of claim 17 or 18.

# FIG.1

SHELL TEMPERATURE [°C]

36

35

34

33

32

31

36°C    36°C    36°C    36°C

SHELL
TEMPERATURE
IN BALANCED
STATE

ELAPSED TIME

—— 26-36°C    - - 21-36°C

# FIG.2

············ 26-36°C – FIRST TIME

— · — 26-36°C – SECOND TIME

— ·· — 26-36°C – THIRD TIME

------ 21-36°C – FIRST TIME

---- 21-36°C – SECOND TIME

--- 21-36°C – THIRD TIME

- - - 26-36°C – MODEL

—— 21-36°C – MODEL

SHELL TEMPERATURE [°C]

40

39

38

37

36

35

34

33

32

31

30

0       5       10      15      20

ELAPSED TIME [MIN]

FIG.3

FIG.4

50 ～ ┌─────────────┐                    ┌─────────────┐
        │   DETECTOR   │ ◄──────────┐ ┌──► │    SENSOR    │ ～ 60
        └─────────────┘            │ │    └─────────────┘
                                   │ │
20 ～ ┌───────────────────────┐     │ │
        │  TEMPERATURE LOAD     │     │ │
        │  MANAGEMENT DEVICE    │     │ │    ┌─────────────────┐
        │ ┌───────────────────┐ │ ◄───┴─┴──► │ AIR CONDITIONER │ ～ 30
10 ～   │ │   CONTROL UNIT    │ │            └─────────────────┘
        │ └───────────────────┘ │
        └───────────────────────┘
                        ▲
                        │
                        ▼
                ┌─────────────┐
                │   ADJUSTER   │ ～ 40              ↖
                └─────────────┘                        ～ 100

# FIG.5

# FIG.6

FIG.7

FIG.8

CHANGE IN HUMAN BODY EXERGY ACCUMULATION AT CORE (W／m2)

ELAPSED TIME (TIME: MIN)

## FIG.9

TOTAL AMOUNT OF HUMAN BODY EXERGY ACCUMULATION AT CORE (J/m2)

ELAPSED TIME (TIME: MIN)

## FIG.10

TOTAL AMOUNT OF HUMAN BODY EXERGY ACCUMULATION AT CORE (J/m2)

ELAPSED TIME (TIME: MIN)

# FIG.11

HOT ENVIRONMENT

26°C  |  36°C  |  RESTORATION ENVIRONMENT

TARGET TIME: 15 MIN

TOTAL AMOUNT OF HUMAN BODY EXERGY ACCUMULATION AT CORE (J/m2)

ELAPSED TIME (TIME: MIN)

23°C    22°C
21°C
26°C
25°C
24°C
19°C
20°C    18°C
17°C
16°C

# FIG.12

SENSOR — 60

20 — TEMPERATURE LOAD MANAGEMENT DEVICE

10 — CONTROL UNIT

AIR CONDITIONER — 30

11 — SENSING UNIT

ADJUSTER — 40

100

## INTERNATIONAL SEARCH REPORT

| International application No. |
| --- |
| **PCT/JP2021/040646** |

### A. CLASSIFICATION OF SUBJECT MATTER

*F24F 11/61*(2018.01)i; *F24F 11/63*(2018.01)i; *F24F 11/80*(2018.01)i; *F24F 110/10*(2018.01)n; *F24F 110/20*(2018.01)n; *F24F 110/30*(2018.01)n; *F24F 120/00*(2018.01)n; *F24F 120/14*(2018.01)n
FI: F24F11/63; F24F11/80; F24F11/61; F24F120:00; F24F120:14; F24F110:10; F24F110:20; F24F110:30

According to International Patent Classification (IPC) or to both national classification and IPC

### B. FIELDS SEARCHED

Minimum documentation searched (classification system followed by classification symbols)

F24F11/61; F24F11/63; F24F11/80; F24F110/10; F24F110/20; F24F110/30; F24F120/00; F24F120/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2018-91573 A (AISIN SEIKI) 14 June 2018 (2018-06-14) paragraphs [0030]-[0096], fig. 1-14 | 1, 11-12, 17, 19 |
| Y | | 2, 9-14, 18-19 |
| A | | 3-8, 15-16 |
| X | JP 2001-99463 A (DAIKIN IND LTD) 13 April 2001 (2001-04-13) paragraphs [0004]-[0070], fig. 1-10 | 1, 9, 10, 11-12, 17, 19 |
| Y | JP 2013-53816 A (PANASONIC CORP) 21 March 2013 (2013-03-21) paragraphs [0183]-[0194], fig. 44-45 | 2, 13-14, 18-19 |
| Y | JP 2019-190765 A (MITSUBISHI ELECTRIC CORP) 31 October 2019 (2019-10-31) paragraph [0018] | 9-12 |
| Y | JP 9-303842 A (TOSHIBA CORP) 28 November 1997 (1997-11-28) paragraph [0029], fig. 2 | 9-12 |

☑ Further documents are listed in the continuation of Box C.    ☑ See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **07 December 2021** | **21 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2021/040646**

C. DOCUMENTS CONSIDERED TO BE RELEVANT

| Category* | Citation of document, with indication, where appropriate, of the relevant passages | Relevant to claim No. |
|---|---|---|
| Y | JP 5-1838 A (MATSUSHITA ELECTRIC WORKS LTD) 08 January 1993 (1993-01-08) paragraph [0012] | 9-12 |

Form PCT/ISA/210 (second sheet) (January 2015)

## INTERNATIONAL SEARCH REPORT
### Information on patent family members

| International application No. |
| --- |
| **PCT/JP2021/040646** |

| Patent document cited in search report | | | Publication date (day/month/year) | Patent family member(s) | Publication date (day/month/year) |
| --- | --- | --- | --- | --- | --- |
| JP | 2018-91573 | A | 14 June 2018 | (Family: none) | |
| JP | 2001-99463 | A | 13 April 2001 | (Family: none) | |
| JP | 2013-53816 | A | 21 March 2013 | CN 103547869 A paragraphs [0364]-[0377], fig. 44-45 | |
| JP | 2019-190765 | A | 31 October 2019 | (Family: none) | |
| JP | 9-303842 | A | 28 November 1997 | (Family: none) | |
| JP | 5-1838 | A | 08 January 1993 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020063864 A

- JP H1061994 A

**Non-patent literature cited in the description**

- **MASANORI SHUKUYA.** Theory of Exergy and Environment-What Is Design of Flow and Circulation